# EUROPEAN PATENT APPLICATION

(11) **EP 1 164 462 A1**
(43) Date of publication of application: **19.12.2001**
(21) Application number: 01600013.5
(22) Date of filing: 01.06.2001
(51) Int. Cl.: G06F 3/02, G06F 3/023

(54) **Computer keyboard**

(30) Priority: 15.06.2000 GR 2000100201
(71) Applicant: Moridis, Christos, Kalamaria 551 33, Thessaloniki (GR)
(72) Inventor: Moridis, Christos, Kalamaria 551 33, Thessaloniki (GR)

(57) **Abstract**

It is a keyboard that can be used as a separate device but also as part of a computer. This keyboard is at the same time an excellent entertainment medium, a data transfer solution and portable notebook and expandability center.

## Description

This invention refers to a computer keyboard that can be used as a separate device but also as part of a computer.

There are many kinds of keyboards in existence. This one is of a special kind as it has the following advantages:

This keyboard is at the same time an excellent entertainment medium, a data transfer solution and portable notebook and also an expandability center.

It operates as an entertainment medium through its 3D SURROUND loudspeakers, CD driver (music CDs) and radio. But apart from being an entertainment medium, this keyboard is also a professional tool. Thus a professional can carry around with him different data stored on a Compact Flash disk and bring them up on any computer. The combination of the LCD screen, the keyboard and the Compact Flash type II drive as a storage facility enables the user to write notes and store them on a Compact Flash disc.

The keyboard is also an expandability center due to its PCMCIA II slot which supports any connection to devices of that sort, and also the established USB HUB which tends to become a standard. Finally, the keyboard can operate when the computer is turned off, which makes it a separate autonomous device that will revolutionize functionality and portability also thanks to its small size. It will also include a detachable hand-rest made of foam rubber so that it is flexible and comfortable for the user.

A practical application can be seen in the attached figures.

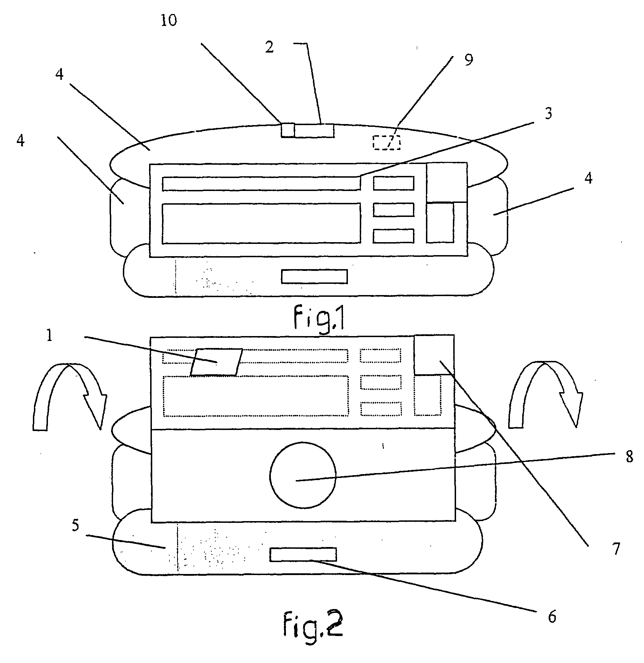

Fig. 1 displays a sectional view of the keyboard.
Fig. 2 displays a sectional view of the keyboard with the front open.

In reference to the figures, the keyboard consists of:

A Compact Flash type II drive -1-, a USB HUB -2-, the main keyboard -3-, the loudspeakers -4-, a foam rubber at the bottom -5-, for the hands. There will be a small speaker -6- in the middle of the foam rubber, an LCD screen -7-, a CD driver -8-, a PCMCIA II slot -9-. Finally the whole keyboard will be connected to a computer through the USB or FIRM WIRE port -10-. There will be a Compact Flash type II Drive-1- for the storage and transfer of data.

The keyboard has a USB HUB (small serial ports where different devices can be connected) thus enabling the connection of other devices of the same sort.

The main keyboard is no different from other existing one apart from the fact that it will have 15 extra multifunctional keys.

The idea of the speakers -4- in the back helps to avoid external speakers and also offers the user 3D SURROUND acoustics. There is an anatomical foam rubber -5- to avoid injury to the hands (Repetitive Strain Injury) after prolonged use of the keyboard.

The LCD screen -7- operates autonomously and controls the whole keyboard and its functions. It also has a built-in clock and alarm clock.

The CD driver -8- is located underneath the keys and can also operate autonomously allowing the user to listen music CDs with the computer switched off.

There is a PCMCIA II port allowing full expandability and enabling any user of a laptop computer to connect devices of this sort as most laptops work with a PCMCIA II port.

The keyboard is available in different colors to reflect the personality of the user.

This keyboard can be used as a separate device and also as part of the computer.

## Claims

1. A computer keyboard **characterized by** the fact that it consists of a Compact Flash type II drive -1-, a USB HUB -2-, the main keyboard -3-, the loudspeakers -4-, an anatomical foam rubber -5- as hand-rest at the bottom, a small speaker -6- in the middle of the foam rubber, an LCD screen -7-, a CD driver -8-, a PCMCIA II slot -9-, The whole keyboard can be connected to a computer through a USB or FIRM WIRE port-10-.
